# FASCICULE DE BREVET EUROPEEN

(11) **EP 2 705 217 B1**
(45) Date de publication et mention de la délivrance du brevet: **24.10.2018**
(21) Numéro de dépôt: 12725082.7
(22) Date de dépôt: 02.05.2012
(51) Int. Cl.: F01D 5/00, F01D 5/28, F01D 25/00, B08B 7/00, B23K 26/36

(54) **PROCÉDÉ DE NETTOYAGE ET DE DÉCAPAGE D'UNE AUBE DE TURBOMOTEUR AU MOYEN D'UN LASER IMPULSIONNEL**
VERFAHREN ZUR REINIGUNG UND ABSTREIFUNG EINES TURBOMOTORBLATTES MIT GEPULSTEM LASER
METHOD FOR CLEANING AND STRIPPING A TURBINE ENGINE BLADE USING A PULSED LASER

(30) Priorité: 02.05.2011 FR 1153733
(43) Date de publication de la demande: 12.03.2014
(73) Titulaire: Safran Aircraft Engines, 75015 Paris (FR)
(72) Inventeur: HUGOT, Juliette, F-77550 Moissy Cramayel Cedex (FR); BOURDIN, Franck, F-35140 Saint Marc Sur Couesnon (FR); FEVRIER, Thierry, F-35420 Louvigne du Desert (FR); GESTIN, Jérôme, F-35140 Gosne (FR)
(74) Mandataire: Gevers & Orès
(86) Numéro de dépôt international: PCT/FR2012/050972
(87) Numéro de publication internationale: WO 2012/150413

(56) Documents cités:
- EP-A1- 1 473 373
- EP-A1- 1 591 188
- US-A1- 2005 224 474
- US-A1- 2007 075 060
- US-B1- 6 172 331
- US-B1- 6 380 512
- US-B2- 7 452 476

## Description

L'invention concerne le domaine de la maintenance et réparation de pièces aéronautiques, en particulier, des aubes d'un turbomoteur.

On entend par aube une pièce ayant une surface apte à canaliser un flux d'air dans le turbomoteur, cette pièce pouvant être mobile (aube de rotor) ou fixe (aube de stator).

De manière classique, au cours d'une opération de maintenance d'un turbomoteur, il est nécessaire d'inspecter les aubes du turbomoteur afin de détecter d'éventuels défauts tels que des fissures ou des criques. Une aube de turbomoteur comporte un corps structural en superalliage recouvert de plusieurs couches de matériau pour former le revêtement de l'aube. Au cours de son utilisation, le revêtement de l'aube s'use et se consomme et doit être remplacé afin de garantir un fonctionnement optimal des aubes. Le remplacement du revêtement d'une aube nécessite d'une part de retirer le revêtement usé et d'autre part d'appliquer un nouveau revêtement sur le corps de l'aube.

En pratique, suite au retrait du revêtement usé, l'aube est inspectée afin de détecter d'éventuels défauts tels que des fissures ou des criques du corps de l'aube. Cela permet d'éviter qu'une aube dont le corps en superalliage est endommagé soit revêtue d'un revêtement neuf.

De manière connue, un revêtement d'aube comporte généralement au moins une couche métallique recouvrant le corps de l'aube et une couche céramique recouvrant la couche métallique. Au cours de son fonctionnement, le revêtement peut développer des oxydes et présenter des parties corrodées ou polluées (salissures, graisses, résidus de combustion, etc.). La couche métallique, dont l'épaisseur est comprise entre 50 et 100 µm, est classiquement désignée « sous-couche métallique » par l'homme du métier tandis que la couche céramique, dont l'épaisseur est comprise entre 150 et 350 µm, est classiquement désignée « barrière thermique ». On connaît un tel revêtement par la demande FR2814473 A1 de la société Snecma.

Le procédé de retrait du revêtement usé de l'aube comporte plusieurs étapes successives telles que des étapes de décapage, de sablage et de nettoyage au moyen de jets d'eau et/ou d'immersion dans des bains acides. Un procédé selon l'art antérieur entraîne des rejets atmosphériques et aqueux de substances dangereuses ce qui présente un inconvénient pour l'environnement. Par ailleurs, un tel procédé est long compte tenu des diverses étapes qui doivent être mises en oeuvre de manière consécutive.

En effet, à titre d'exemple, pour retirer un revêtement d'une aube de turbomoteur, on met en oeuvres les étapes suivantes :
- Nettoyage de la surface de l'aube de manière non-agressive afin de retirer tous les oxydes et polluants présents à la surface de l'aube ;
- Inspection de la surface nettoyée de l'aube afin de déterminer si l'aube peut être réparée ; et
- Nettoyage de l'aube de manière agressive afin de retirer les différentes couches du revêtement de l'aube.
Le nettoyage dit « non agressif » comporte des étapes de dégraissage de l'aube, de nettoyage des circuits internes de l'aube et de suppression des oxydes superficiels.
Le nettoyage dit « agressif » comporte, pour sa part, des étapes de sablage de l'aube, de décapage de la barrière thermique, de décapage de la sous-couche métallique et autres couches, de nettoyage des surfaces et criques du corps de l'aube en superalliage et de nettoyage des canaux de refroidissement de l'aube.
Après réparation du corps de l'aube, on met classiquement en oeuvre une étape de sablage afin d'apporter une rugosité au corps de l'aube favorisant l'accroche d'un revêtement.
Les différentes actions de nettoyage précédemment citées sont généralement mises en oeuvre de manière manuelle et il en résulte des résultats hétérogènes en fonction des opérateurs, en particulier lors du sablage. Dans certains cas, le corps de l'aube en superalliage peut être parfois endommagé lors du nettoyage et l'aube doit être mise au rebut. En outre, un tel procédé peut durer plusieurs heures ce qui présente un inconvénient.
Le document US 2005/224474 A1 décrit un procédé de nettoyage et de décapage d'une aube.
La présente invention vise à éliminer au moins certains de ces inconvénients afin de retirer de manière rapide un revêtement d'une aube de turbomoteur tout en respectant l'environnement et d'en préparer sa surface.
A cet effet, l'invention concerne, un procédé de nettoyage et de décapage d'une aube de turbomoteur comportant un corps en superalliage recouvert d'un revêtement ayant des étapes définies selon la revendication 1, procédé dans lequel on usine au moins partiellement le revêtement de l'aube au moyen d'un laser impulsionnel. Un laser impulsionnel permet avantageusement de retirer le revêtement de manière locale sans endommager le corps en superalliage de l'aube. En outre, un usinage laser permet d'apporter une rugosité au corps de l'aube ce qui évite de recourir à une étape supplémentaire de sablage. De plus, aucun produit chimique n'est utilisé ce qui limite les coûts relatifs au traitement des rejets chimiques.
De préférence, le revêtement comportant au moins une couche extérieure en céramique, le laser impulsionnel est paramétré pour usiner uniquement la couche extérieure en céramique. On peut ainsi remplacer la couche céramique endommagée et appliquer une nouvelle couche extérieure céramique sur la surface nettoyée.

De préférence encore, le revêtement comportant au moins une couche extérieure en céramique et une couche métallique disposée entre le corps en superalliage et la couche céramique, le laser impulsionnel est paramétré pour usiner uniquement la couche extérieure en céramique et la couche métallique. On peut ainsi remplacer les couches endommagées et appliquer de nouvelles couches sur la surface nettoyée.
Selon un aspect de l'invention, le laser impulsionnel est paramétré pour usiner entièrement le revêtement de l'aube (couche céramique et couche métallique). On peut ainsi remplacer le revêtement endommagé et appliquer un nouveau revêtement sur le corps en superalliage dont la surface a été préparée et possède la rugosité désirée.

On paramètre au moins la vitesse d'avance du laser impulsionnel et la fréquence d'impulsion du laser impulsionnel pour que la surface usinée de l'aube présente une rugosité comprise entre 4 µm et 10 µm. Cela permet de manière avantageuse d'appliquer une nouvelle couche ou un nouveau revêtement en bénéficiant d'une surface d'application qui présente de bonnes qualités d'accroché.

La vitesse d'avance du laser impulsionnel est comprise entre 25 mm/s et 1000 mm/s, de préférence, entre 100 mm/s et 600 mm/s. Une telle vitesse permet d'assurer un bon compromis entre la profondeur d'usinage et la vitesse de l'usinage.

La fréquence d'impulsion du laser impulsionnel est comprise entre 12 kHz et 50 kHz, de préférence inférieure ou égale à 16 kHz. Une telle fréquence permet d'assurer un bon compromis entre la profondeur d'usinage et la vitesse de l'usinage.
De préférence, la rugosité est constante sur le revêtement usiné de manière à permettre un accrochage homogène d'un nouveau revêtement et donc une augmentation de sa durée de vie.
De manière préférée, le revêtement comportant une pluralité de couches, le laser impulsionnel usine les couches du revêtement en réalisant une pluralité de passes d'usinage, le nombre de passes d'usinage pour une couche étant défini en fonction de l'épaisseur de la couche et de la dureté du matériau de la couche. Ainsi, on peut conserver le même paramétrage du laser pour usiner une pluralité de couches, seul le nombre de passe devant être paramétré en fonction de la nature des couches.
De préférence encore, le laser impulsionnel est déplacé selon des lignes d'usinage sur le revêtement, deux lignes d'usinage consécutives se chevauchant. Ainsi, on obtient une répartition homogène des bosses et des creux formant la rugosité de la surface décapée ce qui permet un accrochage optimal d'un nouveau revêtement.

Selon un aspect de l'invention, un automate déplace le laser impulsionnel au cours de l'usinage selon une trajectoire définie à partir d'une modélisation tridimensionnelle de l'aube à nettoyer.

Grâce à l'utilisation d'un automate, le nettoyage des aubes est homogène et précis et le risque de blessure d'un opérateur est limité.

L'invention sera mieux comprise à la lecture de la description qui va suivre, donnée uniquement à titre d'exemple, et se référant aux dessins annexés sur lesquels :
- la figure 1 est une vue schématique d'un usinage d'une partie du revêtement d'une aube de turbomoteur au moyen d'un laser impulsionnel commandé par un robot automatisé ;
- la figure 2 est une vue schématique en coupe d'un revêtement d'une aube pendant son usinage laser ;
- la figure 3A représente des lignes d'usinage laser espacées les unes des autres d'une première distance E1 ;
- la figure 3B représente des lignes d'usinage laser espacées les unes des autres d'une deuxième distance E2 ;
- la figure 4A représente trois lignes d'usinage laser comportant chacune une pluralité de points d'usinage, les lignes d'usinage étant respectivement formées par un laser impulsionnel dont les fréquences d'impulsion sont différentes ;
- la figure 4B représente trois lignes d'usinage laser comportant chacune une pluralité de points d'usinage, les lignes d'usinage étant respectivement formées par un laser impulsionnel dont les vitesses d'avance sont différentes ;
- la figure 5A est une vue en coupe d'un revêtement d'une aube de turbomoteur pour un premier mode de mise en oeuvre de l'invention ;
- la figure 5B est une vue en coupe rapprochée de la surface de l'aube de la figure 5A après l'usinage laser ;
- la figure 6A est une vue en coupe d'un revêtement d'une aube de turbomoteur pour un deuxième mode de mise en oeuvre de l'invention ; et
- la figure 6B est une vue en coupe rapprochée de la surface de l'aube de la figure 5B après l'usinage laser.

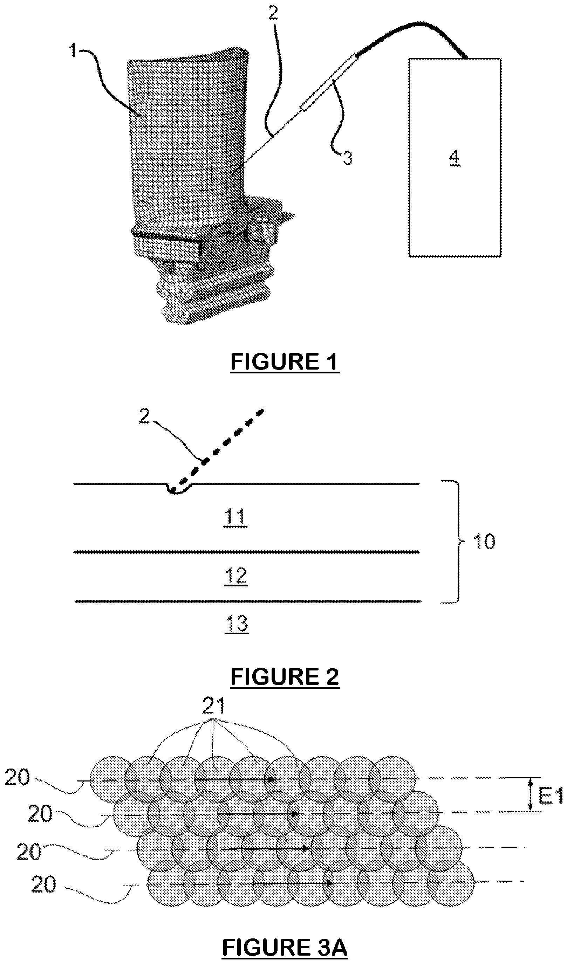

En référence aux figures 1 et 2, l'invention concerne un procédé de nettoyage d'une aube de turbomoteur 1 comportant un corps en superalliage 13 recouvert d'un revêtement 10. Dans cet exemple, le revêtement 10 de l'aube 1 comporte une couche métallique 12 recouvrant le corps de l'aube 13 et une couche céramique 11 recouvrant la couche métallique 12. La couche métallique 12, dont l'épaisseur est comprise entre 50 et 100 µm, est classiquement désignée « sous-couche métallique» par l'homme du métier tandis que la couche céramique 11, dont l'épaisseur est comprise entre 150 et 350 µm, est classiquement désignée « barrière thermique ».

Selon le procédé de nettoyage de l'invention, on retire le revêtement 10 du corps en superalliage 13 de l'aube 1 au moyen d'un laser impulsionnel 3 comme représenté de manière schématique sur la figure 1.

A titre d'exemple, le laser impulsionnel 3 est un laser du type à grenat d'yttrium et d'aluminium, plus connu sous son abréviation anglaise YAG, dont la puissance est d'environ 20 W. Comme représenté sur la figure 1, le faisceau 2 du laser impulsionnel 3 est dirigé sur la surface de l'aube 1 afin d'usiner le revêtement 10 de l'aube 1, le laser impulsionnel 3 permettant de faire exploser de manière localisée le revêtement 10 sans endommager le corps 13 de l'aube 1 ce qui est très avantageux. En outre, aucun produit nocif n'est utilisé ce qui est respectueux de l'environnement. De plus, d'un point de vue de la sécurité, l'usinage laser est de préférence mis en oeuvre au moyen d'un robot automatisé 4 de manière à limiter le risque de blessures des opérateurs. De manière avantageuse, chaque aube 1 est ainsi nettoyée de manière homogène et reproductible.

De préférence, le laser impulsionnel 3 est relié à un automate 4 agencé pour déplacer le laser 3 à la surface de l'aube 1 selon une trajectoire prédéfinie. De manière préférée, la trajectoire d'usinage du laser 3 est paramétrée par une modélisation tridimensionnelle de l'aube 2 qui est fournie à l'automate 4. De manière préférée, le laser impulsionnel 3 est orienté selon une direction normale à la surface de l'aube 1 de manière à permettre un décapage optimal du revêtement 10 de l'aube 1.

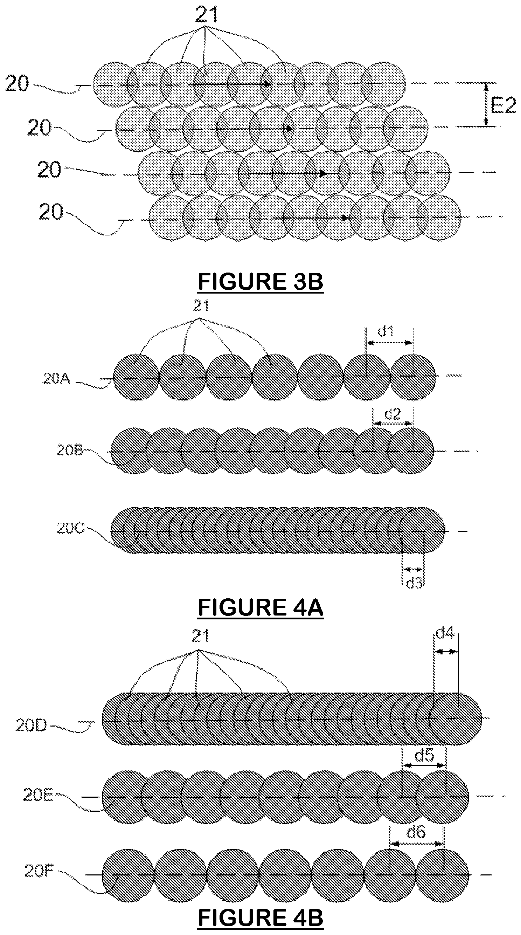

Pour retirer le revêtement 10 de l'aube 1, le faisceau laser 2 balaie le revêtement 10 de l'aube 1 en partant d'une extrémité de l'aube 1. De manière préférée, le faisceau laser 2 se déplace de manière rectiligne selon une ligne d'usinage 20, chaque ligne d'usinage 20 étant formée d'une pluralité de points d'usinage 21, alignés de manière rectiligne comme représenté sur les figures 3A, 3B, 4A, 4B, chaque point d'usinage 21 correspondant à une impulsion du laser impulsionnel 3.

Le laser impulsionnel 3 est paramétré de manière à permettre un retrait du revêtement 10 de manière rapide sans endommager le corps de l'aube 13. En outre, le laser impulsionnel 3 peut être paramétré pour retirer tout ou partie du revêtement 10 de l'aube 1. A cet effet, plusieurs paramètres du laser impulsionnel 3 peuvent être pris en compte tels que la largeur du faisceau laser 2, l'espacement E des lignes de laser, la fréquence F des impulsions du laser, le temps d'impulsion, la distance focale, la vitesse V d'avance du faisceau, la puissance du Laser et le nombre de passes sur l'aube. Selon l'invention, comme cela sera détaillé par la suite, on paramètre au moins la vitesse d'avance du laser impulsionnel et la fréquence d'impulsion du laser impulsionnel pour que la surface usinée de l'aube présente une rugosité comprise entre 4 µm et 10 µm.

La rugosité est un état de surface de l'aube après décapage. Elle se traduit sur la surface de l'aube par la présence d'un relief formé de creux et de bosses. La valeur de la rugosité est définie comme la distance entre le sommet d'une bosse et la cavité d'un creux. Une rugosité de valeur contrôlée et constante sur l'aube permet d'appliquer de manière optimale et rapide un nouveau revêtement en venant s'accrocher aux bosses de la surface décapée de l'aube.

### ◆ Largeur du faisceau laser

La largeur du faisceau 2 correspond à la surface d'application de la puissance du faisceau laser 2 lors de son contact avec le revêtement comme représenté de manière schématique sur la figure 3A. Plus la largeur du faisceau 2 est faible et plus la puissance du faisceau 2 sera concentrée, ce qui augmente l'impact du faisceau 2 sur le revêtement 10 et donc l'épaisseur du revêtement qui sera retirée pour une impulsion individuelle du laser 3, c'est-à-dire pour un point d'usinage 21 d'une ligne d'usinage 20. De manière préférée, la largeur du faisceau laser 2 est égale à 0,01 mm, 0,03 mm ou 0,05 mm de manière à former des points d'usinage 21 dont le diamètre est égal à 0,01 mm, 0,03 mm ou 0,05 mm. Par la suite, la largeur du faisceau laser 2 est égale à 0,03 mm ce qui assure un bon compromis entre la surface d'usinage et la profondeur d'usinage.

### ◆ Temps d'impulsion

Le temps d'impulsion définit la durée pendant laquelle le faisceau laser 2 est en contact avec le revêtement 10 sur un point d'usinage donné 21. Plus la durée d'impulsion est élevée, plus on retire une épaisseur importante du revêtement 10 pour une impulsion individuelle du laser 3. Par la suite, le laser 3 est paramétrée avec un temps d'impulsion de l'ordre de 3 µs ce qui assure un bon compromis entre la vitesse d'usinage et la profondeur d'usinage.

### ◆ Espacement E des lignes de laser

Comme représenté sur les figures 3A et 3B, le faisceau laser 2 se déplace de manière rectiligne le long de lignes d'usinage parallèles 20, chaque ligne d'usinage 20 étant formée d'une pluralité de points d'usinage 21 qui sont alignés de manière rectiligne.

L'espacement E entre les lignes d'usinage permet de définir une surface de recouvrement entre deux lignes d'usinage 20 qui sont voisines. En référence à la figure 3A, si les lignes d'usinage 20 sont proches les unes des autres (espacement E1), le recouvrement des lignes d'usinage 20 est important ce qui peut présenter un risque d'usinage excessif du revêtement 10. Au contraire, en référence à la figure 3B, si les lignes d'usinage 20 sont éloignées les unes des autres (espacement E2), le revêtement 10 situé entre les lignes d'usinage voisines 20 n'est pas retiré ce qui présente un inconvénient. De préférence, on paramètre l'espacement E entre les lignes d'usinage 20 de manière à ce qu'il soit inférieur à la largeur du faisceau 2 afin de permettre un recouvrement supérieur à la moitié de la largeur du faisceau 2 pour écarter tout manque d'usinage et éviter un usinage excessif. Dans cet exemple, pour une largeur de faisceau laser 2 égale à 0,03 mm, l'espace E entre les lignes d'usinage 20 est égal à 0,025 mm.

De manière avantageusement, deux lignes d'usinage successives se chevauchent de manière à permettre d'obtenir une rugosité homogène sur la surface usinée de l'aube 1 et ainsi permettre l'application d'un nouveau revêtement avec une accroche optimale.

### ◆ Distance focale

Ce paramètre est défini pour un laser impulsionnel 3 donné et indique la distance à laquelle le faisceau laser 3 possède la largeur de faisceau 2 définie précédemment. Ce paramètre doit être respecté afin de maîtriser la largeur du faisceau et de ce fait sa puissance. Par la suite, on considère un laser YAG 3 de distance focale égale à 20 cm ce qui correspond, dans cet exemple, à la distance entre la vitre du laser et le point d'impact sur l'aube traitée.

### ◆ Fréquence F des impulsions du laser 3 et vitesse V d'avance du faisceau laser 2

La fréquence F du faisceau laser 2 définit la fréquence du train d'impulsion. Lors de l'usinage laser, la fréquence F est directement liée à la vitesse V d'avance du faisceau 2 pour définir l'espacement d entre deux points d'usinage consécutifs 21 d'une même ligne d'usinage 20 comme représenté sur la figues 4A-4B.

Pour une ligne d'usinage donnée 20, à vitesse d'avance V constante, plus la fréquence F des impulsions est élevée et plus les points d'usinage 21 sont proches les uns des autres. A titre d'exemple, en référence à la figure 4A, les lignes d'usinage 20A, 20B, 20C sont formées avec un laser impulsionnel 3 de vitesse V d'avance constante, égale à 250 mm/s, et dont les fréquences d'impulsion sont respectivement égales à 5kHz, 12kHz et 25kHz. Plus la fréquence des impulsions est élevée et plus la distance d1, d2, d3 séparant des points d'usinage 21 consécutifs est réduite. En pratique, toute fréquence F comprise entre 12 kHz et 50 kHz est compatible.

La vitesse V d'avance du faisceau laser 2 est définie selon la direction d'une ligne d'usinage 20. Ainsi, pour une ligne d'usinage donnée 20, pour une fréquence d'impulsion F constante, la distance séparant des points d'usinage 21 consécutifs est fonction de la vitesse d'avance V. A titre d'exemple, en référence à la figure 4B, les lignes d'usinage 20D, 20E, 20F sont formées avec un laser impulsionnel 3 de fréquence F constante, égale à 12kHz, et dont les vitesses d'avance V sont respectivement égales à 125 mm/s, 250 mm/s et 500 mm/s. Plus la vitesse d'avance V est élevée et plus la distance d4, d5, d6 séparant des points d'usinage 21 consécutifs est grande. En pratique, toute vitesse d'avance V comprise entre 25 mm/s et 1000 mm/s est compatible.

De préférence, pour une même couche à usiner, le laser impulsionnel 3 possède le même paramétrage à chaque passe. Ainsi, plus l'épaisseur d'une couche à retirer est importante, plus le nombre de passes est important. De préférence encore, pour un même revêtement à usiner, le laser impulsionnel 3 possède le même paramétrage à chaque passe pour chacune des couches. Le nombre de passes est défini en fonction de l'épaisseur et de la dureté du matériau de chaque couche.

Selon un premier mode de mise en oeuvre du procédé selon l'invention, seule la couche céramique 11 du revêtement 10 de l'aube 1 est retirée au moyen du laser impulsionnel 3, ce dernier étant paramétré comme suit :
- Largeur du faisceau : 0.03 mm
- Espacement E des lignes de laser : 0.025 mm
- Fréquence F des impulsions du laser : 12 kHz
- Temps d'impulsion : 3 µs
- Distance focale : 20 cm
- Vitesse V d'avance du faisceau : 250 mm/s

Afin de retirer entièrement la couche céramique 11, on effectue 50 passes du faisceau laser 3 sur le revêtement 10. Autrement dit, pour une ligne d'usinage définie 20 sur le revêtement 10, le laser est déplacé 50 fois sur ladite ligne d'usinage 20 au cours du procédé de nettoyage ce qui permet de retirer le revêtement 10 au fur et à mesure des passes du faisceau laser 2.

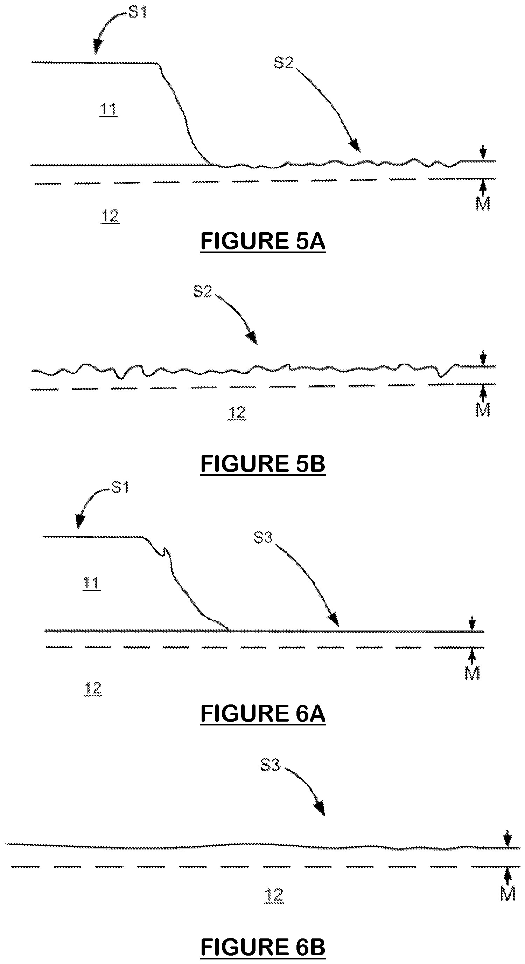

En référence aux figures 5A et 5B représentant une vue en coupe du revêtement après usinage, le premier mode de mise en oeuvre du procédé selon l'invention permet de retirer de manière sélective la couche céramique 11 du revêtement 10 dont l'épaisseur est de l'ordre de 200 µm. Comme représenté sur la figure 5A, la couche céramique 11 n'a été retirée que partiellement de l'aube 1, l'aube 1 comportant ainsi une surface non nettoyée S1 constituée par la couche céramique 11 et une surface nettoyée S2 constituée par la couche métallique 12 après usinage laser.

De manière avantageuse, en référence à la figure 5B représentant une vue rapprochée de la surface nettoyée S2, la rugosité de la surface nettoyée S2 du revêtement 10 après usinage laser est de l'ordre 7 à 9 µm. La rugosité de la surface nettoyée S2 permet avantageusement de déposer directement une nouvelle couche céramique 11 sur la couche métallique 12 sans mettre en oeuvre de manière préalable une étape de sablage comme cela est le cas dans les procédés selon l'art antérieur. Autrement dit, le nettoyage de l'aube au moyen d'un laser impulsionnel 3 permet, d'une part, de retirer tout ou partie du revêtement 10 et, d'autre part, de préparer la surface nettoyée S2 à recevoir une nouvelle couche de protection, ici une nouvelle couche céramique 11.

Un deuxième mode de mise en oeuvre de l'invention est décrit en référence à la figure 6A. Les références utilisées pour décrire les éléments de structure ou fonction identique, équivalente ou similaire à celles des éléments de la figure 5A sont les mêmes, pour simplifier la description. D'ailleurs, l'ensemble de la description du mode de réalisation de la figure 5A n'est pas reprise, cette description s'appliquant aux éléments de la figure 6A lorsqu'il n'y a pas d'incompatibilités. Seules les différences notables, structurelles et fonctionnelles, sont décrites.

Selon le deuxième mode de mise en oeuvre, le laser impulsionnel est paramétré de manière identique à la première mise en oeuvre, seules la fréquence F des impulsions du laser et la vitesse d'avance V étant modifiées. Dans ce mode de mise en oeuvre, la fréquence F des impulsions du laser est de 16 kHz et la vitesse d'avance V est de 500 mm/s. De manière similaire à la première mise en oeuvre, le laser impulsionnel 3 réalise environ 50 passes sur le revêtement de l'aube 1 au cours du procédé de nettoyage ce qui permet de retirer le revêtement au fur et à mesure des passes du faisceau laser 2.

Comme représenté sur les figures 6A et 6B, le deuxième mode de mise en oeuvre du procédé selon l'invention permet également de retirer de manière sélective la couche céramique 11 du revêtement 10. De manière avantageuse, la rugosité de la surface du revêtement 10 après usinage est de 4 à 6 µm comme représenté sur la figure 6B. On paramètre ainsi avantageusement la rugosité souhaitée en modifiant la fréquence F des impulsions du laser et la vitesse d'avance V.

Selon une troisième mise en oeuvre du procédé selon l'invention, le revêtement 10 de l'aube 1 est entièrement retiré au moyen du laser impulsionnel 3. Autrement dit, toutes les couches du revêtement 10 de l'aube 1 sont retirées, dont les couches céramique 11 et métallique 12. A cet effet, le laser impulsionnel 3 est paramétré comme suit :
- Largeur L du faisceau : 0.03 mm
- Espacement E des lignes de laser : 0.025 mm
- Fréquence F des impulsions du laser : 12 kHz
- Temps d'impulsion: 3 µs
- Distance focale: 20 cm
   Vitesse V d'avance du faisceau : 250 mm/s

Dans cette troisième mise en oeuvre, le laser impulsionnel 3 réalise environ 250 passes sur le revêtement 10 de l'aube 1 au cours du procédé de nettoyage ce qui permet de retirer le revêtement 10 au fur et à mesure des passes du faisceau laser 2. Le nombre de passes est ici plus important par comparaison aux précédentes mises en oeuvre du procédé afin d'augmenter l'épaisseur du revêtement 10 à retirer. Ces paramètres permettent de décaper les couches céramique 11 et métallique 12 qui composent le revêtement 10.

Dans une forme de réalisation particulière, le substrat peut être usiné pour obtenir la rugosité souhaitée et ainsi permettre l'accrochage d'un nouveau revêtement.

Après retrait du revêtement 10, le corps en superalliage 13 est nu ce qui permet avantageusement d'inspecter sa surface pour détecter d'éventuels défauts avant d'appliquer un nouveau revêtement 10.

De manière similaire à la première mise en oeuvre du procédé selon l'invention, la rugosité de la surface nettoyée, c'est-à-dire la surface du corps en superalliage 13, est de l'ordre 7 à 9 µm. Cette rugosité permet avantageusement de déposer directement une nouvelle couche métallique 12 sur le corps en superalliage 13. Il suffit ensuite de déposer une nouvelle couche céramique 11 sur la couche métallique 12 pour former le revêtement 10. Du fait du chevauchement des lignes d'usinage, la rugosité obtenue est homogène sur la surface traitée de l'aube, la surface traitée comportant des creux et des bosses régulièrement espacés les uns des autres.

Selon un quatrième mode de mise en oeuvre de l'invention, le revêtement 10 de l'aube 1 est entièrement retiré au moyen du laser impulsionnel 3 paramétré comme ci-dessous :
- Largeur L du faisceau : 0.03 mm
- Espacement E des lignes de laser : 0.025 mm
- Fréquence F des impulsions du laser : 16 kHz
- Temps d'impulsion: 3 µs
- Distance focale: 20 cm
- Vitesse V d'avance du faisceau : 350 mm/s

Dans cette quatrième mise en oeuvre, le laser impulsionnel 3 réalise environ 100 passes sur le revêtement 10 de l'aube 1 au cours du procédé de nettoyage ce qui permet de retirer le revêtement 10 (les couches céramique 11 et métallique 12) au fur et à mesure des passes du faisceau laser 2. Le nombre de passes est ici plus important par comparaison aux deux premières mises en oeuvre du procédé afin d'augmenter l'épaisseur du revêtement 10 à retirer. Après retrait du revêtement 10, le corps en superalliage 13 est nu ce qui permet avantageusement d'inspecter sa surface pour détecter d'éventuels défauts avant d'appliquer un nouveau revêtement 10.

Les paramètres de ce quatrième mode de mise en oeuvre de l'invention permettent de décaper les couches 11 et 12 composant le revêtement 10 en obtenant une rugosité de 4 à 6 µm de la surface du corps en superalliage 13. Une telle rugosité est avantageuse pour déposer une nouvelle couche métallique 12.

## Revendications

1. Procédé de nettoyage et de décapage d'une aube (1) de turbomoteur comportant un corps (13) en superalliage recouvert d'un revêtement (10), procédé dans lequel on usine au moins partiellement le revêtement (10) de l'aube (1) au moyen d'un laser impulsionnel (3), le procédé étant **caractérisé en ce qu'**au moins la vitesse (V) d'avance du laser impulsionnel (3) et la fréquence d'impulsion (F) du laser impulsionnel (3) sont paramétrées pour que la surface usinée de l'aube (1) présente une rugosité comprise entre 4 µm et 10 µm, la vitesse (V) d'avance du laser impulsionnel (3) étant comprise entre 25 mm/s et 1000 mm/s, et la fréquence d'impulsion (F) du laser impulsionnel (3) étant comprise entre 12 kHz et 50 kHz.

2. Procédé selon la revendication 1, **caractérisé en ce que** la vitesse (V) d'avance du laser impulsionnel (3) est comprise entre 100 mm/s et 600 mm/s.

3. Procédé selon la revendication 1 ou 2, **caractérisé en ce que** la fréquence d'impulsion (F) du laser impulsionnel (3) est inférieure ou égale à 16 kHz.

4. Procédé selon l'une des revendications 1 à 3, dans lequel, le revêtement (10) comportant au moins une couche extérieure en céramique (11), le laser impulsionnel (3) est paramétré pour usiner uniquement la couche extérieure en céramique (11).

5. Procédé selon l'une des revendications 1 à 3, dans lequel, le revêtement (10) comportant au moins une couche extérieure en céramique (11) et une couche métallique (12) disposée entre le corps (13) en superalliage et la couche céramique (11), le laser impulsionnel (3) est paramétré pour usiner uniquement la couche extérieure en céramique (11) et la couche métallique (12).

6. Procédé selon l'une des revendications 1 à 5, dans lequel le laser impulsionnel (3) est paramétré pour usiner entièrement le revêtement (10) de l'aube (1).

7. Procédé selon l'une des revendications 1 à 6, dans lequel la rugosité est constante sur le revêtement (10) usiné.

8. Procédé selon l'une des revendications 1 à 7, dans lequel, le revêtement comportant une pluralité de couches, le laser impulsionnel usine les couches du revêtement en réalisant une pluralité de passes d'usinage, le nombre de passes d'usinage pour une couche étant défini en fonction de l'épaisseur de la couche et de la dureté du matériau de la couche.

9. Procédé selon l'une des revendications 1 à 8, dans lequel le laser impulsionnel est déplacé selon des lignes d'usinage sur le revêtement (10), deux lignes d'usinage consécutives se chevauchant.

10. Procédé selon l'une des revendications 1 à 9, dans lequel un automate (4) déplace le laser impulsionnel (3) au cours de l'usinage selon une trajectoire définie à partir d'une modélisation tridimensionnelle de l'aube (1) à nettoyer.

## Patentansprüche

1. Verfahren zum Reinigen und zum Abstreifen eines Turbomotorblattes (1), einen Korpus (13) aus Superlegierung aufweisend, der mit einer Beschichtung (10) überzogen ist, wobei man bei dem Verfahren die Beschichtung (10) des Blattes (1) mindestens teilweise mittels eines gepulsten Lasers (3) bearbeitet, wobei das Verfahren **dadurch gekennzeichnet ist, dass** mindestens die Vorschubgeschwindigkeit (V) des gepulsten Lasers (3) und die Impulsfrequenz (F) des gepulsten Lasers (3) so parametriert werden, dass die bearbeitete Oberfläche des Blattes (1) eine Rauigkeit zwischen 4 µm und 10 µm aufweist, wobei die Vorschubgeschwindigkeit (V) des gepulsten Lasers (3) im Bereich zwischen 25 mm/s und 1000 mm/s liegt und die Impulsfrequenz (F) des gepulsten Lasers (3) im Bereich zwischen 12 kHz und 50 kHz liegt.

2. Verfahren nach Anspruch 1, **dadurch gekennzeichnet, dass** die Vorschubgeschwindigkeit (V) des gepulsten Lasers (3) im Bereich zwischen 100 mm/s und 600 mm/s liegt.

3. Verfahren nach Anspruch 1 oder 2, **dadurch gekennzeichnet, dass** die Impulsfrequenz (F) des gepulsten Lasers (3) kleiner als oder gleich 16 kHz ist.

4. Verfahren nach einem der Ansprüche 1 bis 3, wobei der gepulste Laser (3), da die Beschichtung (10) mindestens eine Außenschicht aus Keramik (11) aufweist, so parametriert wird, dass ausschließlich die Außenschicht aus Keramik (11) bearbeitet wird.

5. Verfahren nach einem der Ansprüche 1 bis 3, wobei der gepulste Laser (3), da die Beschichtung (10) mindestens eine Außenschicht aus Keramik (11) und eine Metallschicht (12) aufweist, die zwischen dem Körper (13) aus Superlegierung und der Keramikschicht (11) angeordnet ist, so parametriert wird, dass ausschließlich die Außenschicht aus Keramik (11) und die Metallschicht (12) bearbeitet werden.

6. Verfahren nach einem der Ansprüche 1 bis 5, wobei der gepulste Laser (3) so parametriert wird, dass die Beschichtung (10) des Blattes (1) vollständig bearbeitet wird.

7. Verfahren nach einem der Ansprüche 1 bis 6, wobei die Rauigkeit über die bearbeitete Beschichtung (10) konstant ist.

8. Verfahren nach einem der Ansprüche 1 bis 7, wobei der gepulste Laser, da die Beschichtung eine Vielzahl von Schichten aufweist, die Schichten der Beschichtung bearbeitet, indem er eine Vielzahl von Bearbeitungsdurchgängen ausführt, wobei die Anzahl an Bearbeitungsdurchgängen für eine Schicht in Abhängigkeit von der Dicke der Schicht und von der Härte des Materials der Schicht definiert wird.

9. Verfahren nach einem der Ansprüche 1 bis 8, wobei der gepulste Laser entlang von Bearbeitungslinien auf der Beschichtung (10) bewegt wird, wobei sich zwei aufeinanderfolgende Bearbeitungslinien überlappen.

10. Verfahren nach einem der Ansprüche 1 bis 9, wobei ein Automat (4) den gepulsten Laser (3) im Lauf der Bearbeitung entlang einer Bahn bewegt, die anhand einer dreidimensionalen Modellierung des zu reinigenden Blattes (1) definiert wird.

## Claims

1. Method for cleaning and stripping a turboshaft engine blade (1) comprising a superalloy body (13) covered with a coating (10), method in which the coating (10) of the blade (1) is machined at least partially using a pulsed laser (3), the method being **characterised in that** at least the feed rate (V) of the pulsed laser (3) and the pulse frequency (F) of the pulse laser (3) are parameterised so that the machined surface of the blade (1) has a roughness of between 4 µm and 10 µm, with the feed rate (V) of the pulse laser (3) being between 25 mm/s and 1000 mm/s, and the pulse frequency (F) of the pulse laser (3) being between 12 kHz and 50 kHz.

2. Method according to claim 1, **characterised in that** the feed rate (V) of the pulse laser (3) is between 100 mm/s and 600 mm/s.

3. Method according to claim 1 or 2, **characterised in that** the pulse frequency (F) of the pulse laser (3) is less than or equal to 16 kHz.

4. Method according to one of claims 1 to 3, wherein the coating (10) comprising at least one outer ceramic layer (11), the pulse laser (3) is parameterised in order to machine only the outer ceramic layer (11).

5. Method according to one of claims 1 to 3, wherein, the coating (10) comprising at least one outer ceramic layer (11) and one metal layer (12) arranged between the superalloy body (13) and the ceramic layer (11), the pulse laser (3) is parameterised to machine only the outer ceramic layer (11) and the metal layer (12).

6. Method according to one of claims 1 to 5, wherein the pulse laser (3) is parameterised to fully machine the coating (10) of the blade (1).

7. Method according to one of claims 1 to 6, wherein the roughness is constant on the machined coating (10).

8. Method according to one of claims 1 to 7, wherein the coating comprising a plurality of layers, the pulse laser machines the layers of the coating by carrying out a plurality of machining passes, with the number of machining passes for a layer being defined according to the thickness of the layer and the hardness of the material of the layer.

9. Method according to one of claims 1 to 8, wherein the pulse laser is displaced according to machining lines of the coating (10), with two consecutive machining lines overlapping.

10. Method according to one of claims 1 to 9, wherein an automaton (4) displaces the pulse laser (3) during machining following a trajectory defined using three-dimensional modelling of the blade (1) to be cleaned.
